Europäisches Patentamt

European Patent Office

Office européen des brevets

(19)

(11) Publication number: **0 240 954 B1**

(12) **EUROPEAN PATENT SPECIFICATION**

(45) Date of publication of patent specification: **14.08.91** (51) Int. Cl.⁵: **B23K 1/00, B23P 15/26**

(21) Application number: **87104997.9**

(22) Date of filing: **03.04.87**

(54) Method of making fluxless soldered joints and heat exchangers provided by such method.

(30) Priority: **04.04.86 US 848113**

(43) Date of publication of application:
**14.10.87 Bulletin 87/42**

(45) Publication of the grant of the patent:
**14.08.91 Bulletin 91/33**

(84) Designated Contracting States:
**DE ES FR GB IT SE**

(56) References cited:
**GB-A- 2 134 833**
**US-A- 4 207 662**
**US-A- 4 377 024**

(73) Proprietor: **NORSK HYDRO A.S.**
**Bygdoy Allé 2**
**N-0257 Oslo 2(NO)**

(72) Inventor: **Clausen, Edvin List**
**Kogsvn. 10**
**DK-6270 Tonder(DK)**
Inventor: **Knoll, Richard**
**1835 S. Atlantic Avenue No. 470**
**Cocoa Beach Fl. 32932(US)**

(74) Representative: **WILHELMS, KILIAN & PART-NER Patentanwälte**
**Eduard-Schmid-Strasse 2**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method of joining aluminium members according to the preamble of the patent claim 1 and in particular to a method of making an aluminium heat exchanger according to the preamble of the patent claim 3.

The soldering of tubular aluminium joints using zinc solder represents a number of problems connected to formation of a tenacious surface oxide layer on the aluminium members. In case of bell and spigot type of joints ultrasonic energy is normally applied to the aluminium members while submerged in a bath of molten solder, or directly to the bath. There are several known modifications of this technique using additionally solder rings or solder precoated ends on the joined tubular members. A drawback in common for the known processes is the difficulty in transferring sufficient energy into the solder/members to provide the required removing of oxides from the joined member. Furthermore, it is generally undesirable to use high intensity ultrasonic energy because of the spot attacks arising on the walls of the joined members and resulting in an excessive localized alloying or dissolution of the base metal. This problem is widely recognized and described by prior art, e.g. GB-A-1,519,891, so that a consistent and uniform soldering joint, especially over large joint areas, cannot be achieved by these methods.

US-A-4,377,024 discloses a method of making an automotive radiator, where in order to achieve a leak-proof radiator having sufficient rigidity a primary load bearing welded joint between the tubes and headers is provided and then additionally a solder sealant coating is applied over the adjacent areas of the tubes and header plates. This is a rather laborous assembling method requiring special welding equipment and furthermore use of soldering flux both for the sealing operation and soldering of finstock to the tubes. Use of flux in soldering processes requires, as known, an additional cleaning operation and represents a risk of corrosion promosion in the assembled radiator.

The object of the present invention is therefore to provide a new and simplified method of fluxless soldering of aluminium joints resulting in strong, consistent and uniform bonds between the joined members.

Furthermore from the GB-A-2 134 833 a method of bonding metal bodies, for example metal sheets, is known which is conducted in a controlled atmosphere for example in an inert gas or nitrogen atmosphere by applying high pressures in order to achieve diffusion or transient liquid phase bonding, hot rolling, extrusion or explosive bonding.

Finally from the US-A-4 207 662 a method of manufacturing an aluminium heat exchanger by brazing at temperatures between 585°C and 595°C in a vacuum furnace is known. With this method support plates of the heat exchanger comprising an Al-core clad with a brazing layer containing 3-15 % Si and 0,4-10 % Mg are corrugated providing valleys with apertures accomodating pipes ensuring that an adequate amount of brazing material can be disposed for brazing the plates and pipes together. This known method has the drawback of a high energy consumption and the requirement to provide support plates which are formed in a special way.

The object of the present invention is therefore to provide a new and simplified method of fluxless soldering of aluminium joints resulting in strong, consistent and uniform bonds between the joined members.

Another object of the invention is to provide a new method of assembling heat exchangers in one single soldering operation.

Still another object of the invention is to provide a leak-proof and rigid heat exchanger having an improved heat transfer performance.

These objects are obtained by the method steps of claim 1 respectively claim 3.

The method according to the present invention is in particular useful for producing heat exchangers of the type claimed by the patent claim 4.

Fig. 1 is a flow chart schematically illustrating the successive steps in the method of joining Al-members according to the present invention.

Fig. 2 shows in a schematic fragmentary perspective view, and partially in cross-section, a preferred embodiment of the heat exchanger provided by the method.

Fig. 3 is a fragmentary sectional view of the heat exchanger taken substantially along line 3-3 of Fig. 2.

Fig. 4 is another fragmentary sectional view of the heat exchanger taken substantially along line 4-4 of Fig. 2.

Fig. 5 is still another fragmentary sectional view of the heat exchanger taken along line 5-5 of Fig. 2.

Aluminium members coated in nascent state by molten zinc or zinc alloy exhibit an excellent adhesion between the coating layer and the aluminium substrate. A proper diffusion bond is established between Zn and Al thanks to the absence of an interfering oxide layer (particles) on the Al-surface during the coating process. In accordance with the present invention, and contrary to previously known attempts to join zinc coated Al-members to uncoated Al-members, a strong consistent bond has been achieved between such joined members, where at least one of the members was provided by an adherent diffusion bonded zinc coating and by applying mechanical agitation on the joined members.

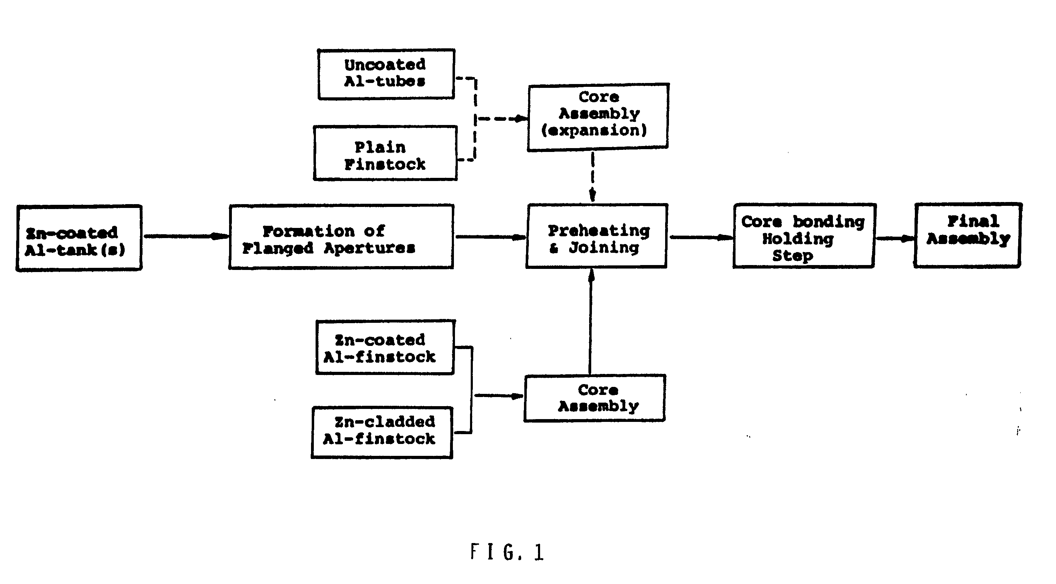

Fig. 1 illustrates by means of a flow chart the successive steps of joining aluminium members in the process of assembling heat exchangers. An initial step in the process is a provision of extruded zinc coated aluminium tanks having one or more separated chambers for circulation of fluidum. The whole surface of the tank or just one side designated for connection to the spaced tubes of the heat exchanger core, is provided with an adherent layer of solidified zinc having a thickness of 30 to 150 micro meter. By referring to zinc, it is understood that zinc also means zinc alloys, e.g. alloys comprising additionally Al and/or Cu. Use of such zinc alloys, having up to 40°C lower melting point compared to pure zinc, allows to conduct the subsequent soldering operation at a substantially lower temperature. The next step is provision of flanged apertures as integral depressions in the solder coated walls of the tank chambers. Flanges having uniform height, dimensions and a coherent layer of zinc coating are formed around the openings in the chamber walls protruding inwardly into the chambers by any commercially adapted method, e.g. by first piercing a hole and then drawing a flange between a mandrel and a back-up tool (not shown in the Figures). In a preferred embodiment, zinc coated tubes with zinc cladded aluminium finstock positioned between the tubes and held together by means of a frame or fixture forming a heat exchanger core are then joined together with the tank preheated to temperatures from 400 - 500°C in the next step by an axially applied pressure on the heat exchanger core. Simultaneously during this joining operation also a mechanical agitation on at least one of the joined members is applied. The joined members can be exposed to vibration or discontinued (stepwise) pressure exposure in order to achieve a relative movement between the joined parts.

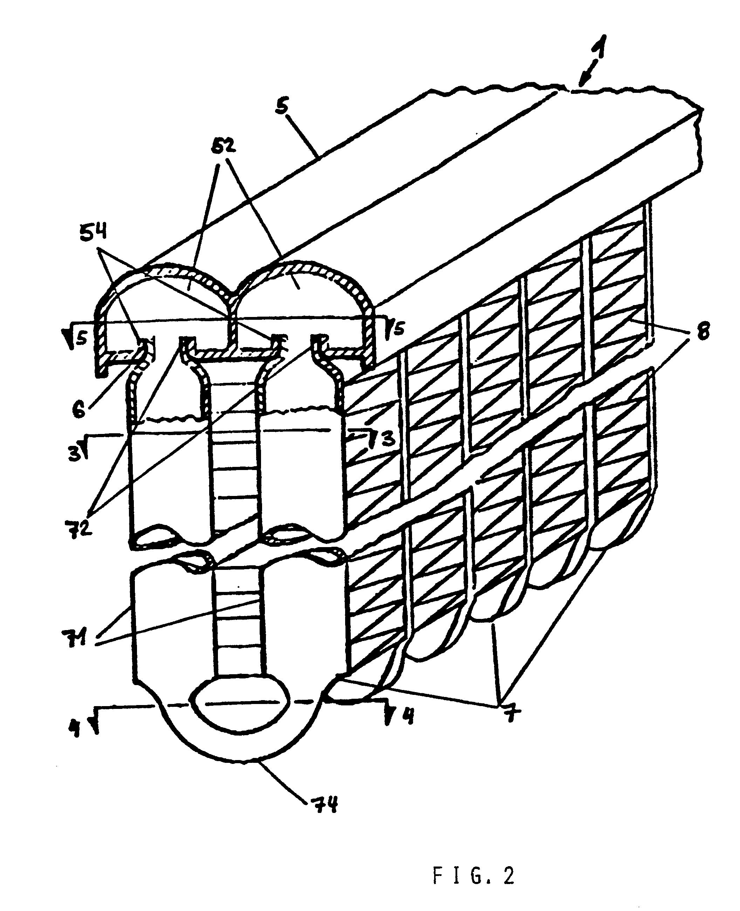

This is especially important when one of the joined aluminium members is uncoated, e.g. uncoated tubes applied in an alternative assembling procedure shown by dotted lines in Fig. 1. The joined parts are then held together at a temperature above the melting point of the applied solder coating for a certain period of time. This holding period allows for proper bonding of all the assembled parts, approximately from 30 to 300 seconds as a function of the preheating temperatures, preheating of one or all joined members, complexity and mass of the assembly, etc. In the final assembling step indicated in Fig. 1, the solder joined core and tank members are then completed with end closure caps to form heat exchanging units, e.g. heaters as shown in Fig. 2. The end caps can be brazed or welded to the tanks or even glued depending on the applied materials.

Fig. 2 is a schematic fragmentary perspective view of a heat exchanger (1) provided by the method according to the present invention. An aluminium tank (5), having two separated chambers (52) providing an inlet and an outlet path for circulation of heat exchanging medium, is provided with an adherent layer of zinc solder (6) extending onto the flanged apertures (54) protruding inwardly in the chambers (52). Hair pin tubes (7), one of them being shown partially in a vertical cross-section with its open ends (72) inserted and soldered into the flanged apertures (54) of the top tank (5), connect the respective inlet and outlet chambers (52) and form a continuous circulation path through the heat exchanger. Finstock (8) shown as zig-zag arranged finplates between the adjacent hair pin tubes is in this case soldered to the tubes.

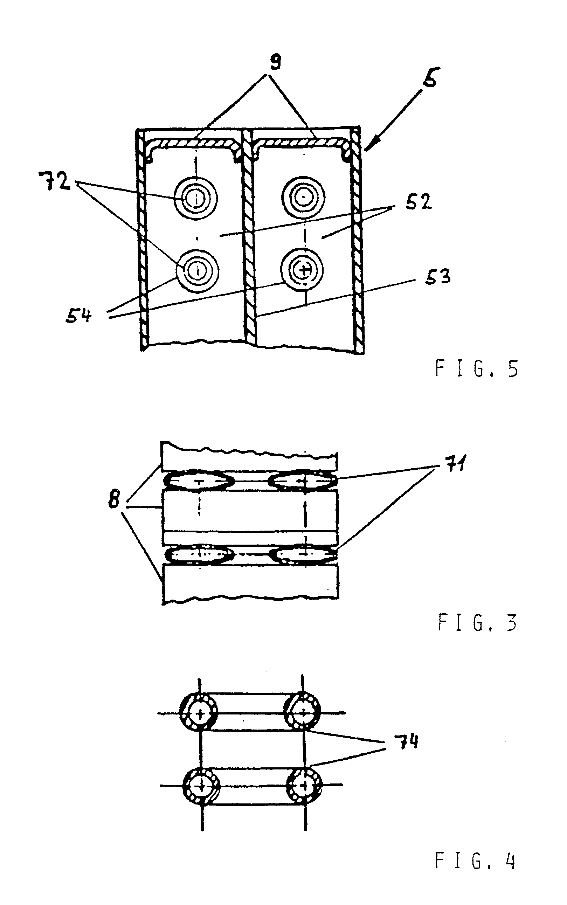

The unique configuration of the hair pin tubing, as disclosed in a co-pending U.S. Patent Application Serial No. 589,932, is also illustrated in Figs. 3 and 4 showing fragmentary sectional views taken along lines 3-3 and 4-4 of Fig. 2, respectively. This hair pin aluminium tube (7) comprises two parallel rectilinear leg portions (71) having respective first ends joined by a U-shaped bend portion (74) formed integrally with the leg portions and open second ends (72). The leg portions have throughout substantially the entire length thereof an oval cross-section enabling an adequate support for the finplates (8) positioned between the adjacent tubes (Fig. 3), and the U-bend portion (74) of the substantially circular cross-section defining an internal passage area no smaller than the internal passage area of each of the leg portions (71) - Fig. 4.

In order to facilitate and simplify the connection between the hair pin and the tank chambers the open ends (72) can conform to fit into the circular cross-section of the flanged apertures (54) as shown in Fig. 2 and Fig. 5. Fig. 5 illustrates in a fragmentary sectional view taken along line 5-5 of Fig. 2 the top part of the heat exchanger. The extruded aluminium tank (5) is divided by a partition wall (53) into two chambers (52), each chamber comprising a number of flanged apertures (54) accomodating the open ends (72) of the hair pin tubes being firmly joined together by soldering. Closure caps (9) welded, brazed or glued to the tank ends encapsulate the chambers providing a circulation path for the heat exchanging fluid.

Two major advantages can be achieved by applying such a configuration of hair pin tubes in heat exchangers: The largest diameter of the leg portions can always be orientated in the direction of (coplanar with) the air (gas) stream regardless of the angle between the said largest diameter and the connection line between the leg portions, something which results in optimal heat transfer parameters. Furthermore, the (flat) oval cross-section of the leg portions ensure sufficient contacts between the finstock and the tubes when finstock without aligned apertures to accommodate the tubes is used in the form of zig-zag arranged finplates soldered to the tubes.

From the foregoing it will be apparent that various modifications of the presently described and illustrated joining process and the achieved heat exchangers may be made without departing from the invention as expressed in the accompanying claims. E.g. instead of hair pin tubes two liquid tanks coated with zinc solder and a plurality of spaced, substantially rectilinear tubes with interconnecting fins extending between the tanks can be joined together providing a heat exchanger according to the present invention. Uncoated tubes provided with finstock having aligned apertures to accomodate the tubes, the tubes being expanded into firm contact with the finstock prior to fluxless soldering to the tank is another possible variant of the present disclosed method of joining aluminium members.

## Claims

1. A method of joining aluminium members by a Zn or Zn alloy solder which comprises the steps of providing a molten solder pool, bringing and holding the members in contact with each other by way of molten solder for a period of time and a temperature above the solder melting point and subsequently solidifying the solder,
   characterized by the steps of providing at least one of the members with an adherent diffusion bonded coating of solder, preheating at least one of the coated members to a temperature above the melting point of the solder thereby in situ forming the molten solder pool on the surface of the coated member,
   applying a mechanical agitation directly to at least one of the members, and
   cooling the members to solidify the solder.

2. A method according to claim 1,
   characterized in that
   the mechanical agitation is applied by vibrating the members.

3. A method of making an aluminium (Al) heat exchanger (1) having a core of spaced Al tubes (7) and Al interconnecting fins (8) extending between the tubes (7), the tubes (7) being connected to a liquid tank having separated chambers for the circulation of a fluid by a Zn or Zn alloy solder,
characterized in that
the method comprises the steps of providing an extruded tank member (5) with an adherent diffusion bonded coating of solidified solder (6), forming flanged apertures (54) as integral depressions in the solder coated chamber walls, preheating the tank member (5) to a temperature above the melting point of the solder and thereby in situ forming a molten solder pool, inserting the open ends (72) of the spaced tubes (7) into the flanged apertures (54) of the tank member (5), applying an axial pressure on the tubes (7) and thereby forcing the tubes (7) into said apertures (54), holding the joined tubes and tank member (7, 5) at the elevated temperature and under pressure for a period of time and finally cooling the joined members (7, 5) to solidify the solder (6).

4. An aluminium heat exchanger having a core of spaced tubes (7) and interconnecting fins extending from liquid tank (5),
   characterized in that
   the tank (5) comprises an aluminium extruded shape having at least two separated chambers (52) provided with a number of flanges apertures (54) formed as integral depressions in the solder coated chamber walls, the chambers (52) being connected with each other by a plurality of spaced hair pin tubes (7) providing a continuous path for circulation of heat exchanging fluid, the hair pin tubes (7) comprising two parallel rectilinear leg portions (71) having respective first ends joined by a U-shaped bend portion (74) formed integrally with the leg portions (71) and open second ends (72) inserted into the flanged apertures (54) and soldered to the tank (5) wherein the leg portions (71) having throughout substantially the entire length thereof an oval cross-section and the U-bend portion (74) of substantially circular cross-section defining an internal passage area no smaller than the internal passage area of each of the leg portions (71).

## Revendications

1. Procédé de liaison d'éléments en aluminium à l'aide d'une brasure en zinc ou en alliage de zinc qui comporte les étapes consistant à utiliser une brasure fondue, à mettre les éléments en contact l'un avec l'autre et à maintenir le contact à l'aide de brasure fondue pendant une période de temps et à une température supérieure au point de fusion de la brasure et ensuite à solidifier la brasure, caractérisé en ce qu'il comporte les étapes consistant à munir au moins un des éléments avec une diffusion adhésive combinée à un revêtement de brasure, à préchauffer ledit au moins un des éléments revêtus à une température supérieure au point de fusion de la brasure pour former in situ la brasure fondue sur la surface de l'élément revêtu, à appliquer une agitation mécanique directement sur ledit au moins un des éléments, et à refroidir les éléments pour solidifier la brasure.

2. Procédé selon la revendication 1, caractérisé en ce que l'agitation mécanique est obtenue par mise en vibration des éléments.

3. Procédé de fabrication d'un échangeur de température (1) en aluminium (Al) comportant un noyau de tube d'aluminium espacé (7), et des ailettes de liaison en aluminium (8) s'étendant entre les tubes (7), les tubes (7) étant reliés à un réservoir de fluide ayant des chambres séparées pour la circulation d'un fluide, à l'aide d'une brasure en zinc ou en alliage de zinc, caractérisé en ce que le procédé comporte les étapes consistant à réaliser un élément formant réservoir extrudé (5), ayant une diffusion adhésive combinée à un revêtement de brasure solidifiée (6), à former des ouvertures avec bride (54) sous forme de cavité des parois de la chambre revêtue de brasure, à préchauffer l'élément formant réservoir (5) à une température supérieure au point de fusion de la brasure et à former ainsi in situ une brasure fondue, à insérer les extrémités ouvertes (72) des tubes espacés (7) dans les ouvertures épaulées (54) de l'élément formant réservoir (5), à appliquer une pression axiale sur les tubes (7) et forcer ainsi les tubes (7) dans les ouvertures (54), à maintenir les tubes assemblés et l'élément formant réservoir (7, 5) à une température élevée et sous pression pendant une période de temps et enfin à refroidir les éléments assemblés (7, 5) pour solidifier la brasure (6).

4. Echangeur de température en aluminium possédant un noyau de tubes espacés (7) et des ailettes de liaison s'étendant à partir d'un réservoir de liquide (5), caractérisé en ce que le réservoir (5) comporte une forme extrudée en aluminium possédant au moins deux chambres séparées (52) pourvues de plusieurs ouvertures épaulées (54) étant des enfoncements prévus dans les parois de la chambre revêtues de brasure, les chambres (52) étant reliées l'une à l'autre par plusieurs tubes en épingles à cheveux espacés (7) formant un trajet continu pour la circulation d'un fluide échangeur de chaleur, les tubes en épingles à cheveux (7) comportant deux jambes (71) rectilignes et parallèles ayant respectivement des premières extrémités reliées par une partie de liaison en forme de U (74) venue de matière avec les jambes (71) et des secondes extrémités ouvertes (72) insérées dans les ouvertures épaulées (54) et brasées sur le réservoir (5), et dans lequel les jambes (71) possèdent sensiblement sur toute leur longueur une section transversale ovale et les parties de liaison en U (74) de section transversale sensiblement circulaire définissent une zone de passage intérieure pas plus petite que la zone de passage intérieure de chacune des jambes (71).

**Patentansprüche**

1. Verfahren zum Verbinden von Aluminiumbauteilen mit einem Zn oder Zn Legierungslötmittel, welches die Schritte, ein geschmolzenes Lötmittelbad vorzusehen, die Bauteile in Kontakt miteinander über das geschmolzene Lötmittel für ein Zeitintervall und bei einer Temperatur über dem Lötmittelschmelzpunkt zu bringen und zu halten und anschließend das Lötmittel zu verfestigen, umfaßt, gekennzeichnet durch die Schritte wenigstens eines der Bauteile mit einer anhaftenden Diffusionskontaktbeschichtung des Lötmittels zu überziehen, wenigstens eines der beschichteten Bauteile auf eine Temperatur über dem Schmelzpunkt des Lötmittels vorzuheizen, um dadurch an Ort und Stelle das geschmolzene Lötmittelbad auf der Oberfläche des beschichteten Elementes zu bilden, wenigstens eines der Bauteile direkt an einer mechanischen Bewegung auszusetzen und die Bauteile abzukühlen, um das Lötmittel zu verfestigen.

2. Verfahren nach Anspruch 1, dadurch gekennzeichnet, daß die mechanische Bewegung dadurch bewirkt wird, daß die Bauteile in Schwingung versetzt werden.

3. Verfahren zum Herstellen von Aluminium(Al)-Wärmetauschern (1) mit einem Kern aus beabstandeten Al-Rohren (7) und Al-Verbindungsrippen (8), die zwischen den Rohren (7) verlaufen, wobei die Rohre (7) durch ein Zn oder Zn Legierungslötmittel mit einem Flüssigkeitsbehälter verbunden sind, der getrennte Kammern zur Zirkulation eines Fluides aufweist, dadurch gekennzeichnet, daß das Verfahren die Schritte, ein extrudiertes Behälterelement (5) mit einer anhaftenden Diffusionskontaktbeschichtung aus verfestigtem Lötmittel (6) vorzusehen, Öffnungen mit Flanschen (54) als einstückige Vertiefungen in den lötmittelbeschichteten Kammerwänden vorzusehen, das Behälterelement (5) auf eine Temperatur über dem Schmelzpunkt des Lötmittels vorzuheizen und dadurch an Ort und Stelle ein geschmolzenes Lötmittelbad zu bilden, die offenen Enden (72) der beabstandeten Rohre (7) in die mit Flanschen versehenen Öffnungen (54) des Behälterelementes (5) einzusetzen, einen axialen Druck auf die Rohre (7) auszuüben und dadurch die Rohre (7) zwangsweise in die Öffnungen (54) einzuführen, die verbundenen Rohre und das Behälterelement (7, 5) auf der erhöhten Temperatur und unter einem Druck für ein Zeitintervall zu halten und schließlich die verbundenen Elemente (7, 5) abzukühlen, um das Lötmittel (6) zu verfestigen, umfaßt.

4. Aluminiumwärmetauscher mit einem Kern aus beabstandeten Rohren (7) und Verbindungsrippen, die von einem Flüssigkeitsbehälter (5) ausgehen, dadurch gekennzeichnet, daß der Behälter (5) ein extrudiertes Aluminiumformteil mit wenigstens zwei getrennten Kammern (52) umfaßt, die mit einer Anzahl von mit Flanschen versehenen Öffnungen (54) versehen sind, die als einstückige Vertiefungen in den lötmittelbeschichteten Kammerwänden ausgebildet sind, wobei die Kammern (52) miteinander über mehrere beabstandete Haarnadelrohre (7) verbunden sind, die einen durchgehenden Zirkulationsweg eines Wärmeaustauschfluides liefern, die Haarnadelrohre (7) zwei parallele geradlinige Schenkelteile (71) mit jeweiligen ersten Enden, die durch einen U-förmig gebogenen Teil (74) verbunden sind, der in einem Stück mit den Schenkelteilen (71) ausgebildet ist, und mit offenen zweiten Enden (72) umfassen, die in die mit Flanschen versehenen Öffnungen (54) eingesetzt und an den Tank (5) gelötet sind, wobei die Schenkelteile (71) über im wesentlichen die gesamte Länge einen ovalen Querschnitt haben und der U-förmig gebogene Teil (74) einen im wesentlichen kreisförmigen Querschnitt hat, durch den eine Innendurchgangsfläche begrenzt wird, die nicht kleiner als die Innendurchgangsfläche jedes Schenkelteils (71) ist.

FIG. 1

EP 0 240 954 B1

F I G. 2

F I G. 5

F I G. 3

F I G. 4